# EUROPEAN PATENT APPLICATION

(11) **EP 2 319 597 A1**
(43) Date of publication of application: **11.05.2011**
(21) Application number: 10186862.8
(22) Date of filing: 07.10.2010
(51) Int. Cl.: A63F 13/12

(54) **A system of providing data for entertaining presentations to at least one audience**

(30) Priority: 13.10.2009 US 250931 P
(71) Applicant: Crytek GmbH, 60386 Frankfurt am Main (DE)
(72) Inventor: Yerli, Cevat, 60314 Frankfurt (DE)
(74) Representative: 2K Patentanwälte Blasberg Kewitz & Reichel

(57) **Abstract**

The present invention relates to a system and to a method for providing data for entertaining presentations to at least one audience, such as data for video and audio presentations in cinemas, theater rooms or the like. In particular data for computer-based entertainment such as so-called theater gaming shall be provided. The system of the invention comprises: at least one content server (120) providing content data, the data representing at least content information for a video presentation to be displayed to the audience; and at least one computing server (130') computing output data from said content data, the output data representing at least a video signal for controlling a display device. The computing servers can be part of the Internet to form an "Online Gaming Server Cloud" (130) or can be installed at the locations of each cinema to form "Local Gaming Server Clouds".

## Description

### Field of Invention

The present invention relates to a system and to a method for providing data for entertaining presentations to at least one audience, such as data for video and audio presentations in cinemas, theater rooms or the like. In particular the present invention relates to a system and a method for providing data for computer-based entertainment, like presenting cinema movies or performing so-called theater games and interactive advertisement games.

### Background of Invention

Digital cinema systems are well-known to provide video and audio data for presenting movies including advertisements. These systems are computer-based and usually comprise a server being installed at the location of presentation, i.e. in the cinema, to provide video and audio data of that movie which shall be shown to the audience. Such a system is disclosed in U.S. 6,384,893 B1. Some of the known systems have been enhanced to provide data for a so-called multiplex movie theater or cineplex having several projection rooms. Such a system is disclosed in U.S. 6,812,994 B2. There is described a method for scheduling a playlist from digital content supplied to a server in a multi-screen digital cinema theater.

Further to this systems have been developed for so-called theater gaming which is a modem technology in the field of computer-based games. These systems comprise cinema equipment, a server and gamepads so that a group of players, i.e. the theater audience, can jointly play computer games. Such a system is disclosed in U.S. 6,257,982 B1.

Further to this there are known systems to provide data for advertisements being presented to an audience. From U.S. 2003/0033197 A1 a method is known for presenting advertisement information shown before or after the featured presentation in a movie theater.

All these known systems and methods have in common that data, in particular video data, are provided to be displayed on at least one cinema screen for entertaining audiences. The people of the audience may just enjoy watching the presentation (e.g. the movie) or may actively be involved in the presentation (e.g. game). In any case there is a need to have full and quick access to the content data and to provide a fast and high quality computing of the data for being projected on the screen and output by the loudspeakers. The latter step of computing is often also called rendering when the content data represent image data or frames for 3D graphics or movies, respectively.

At present the computing, such as rendering, is performed by the computer or server which is installed at the cinema or theater and which has access to the content data being stored in a content database. Consequently a high invest has to be made at each cinema for installing such a system. Further to this the hardware and software of said computer or server will have frequently to be updated or upgraded to be in line with the developing technology of rendering computer graphics and movies. Moreover the known systems are not prepared to flexible integrate advertisements into running movies or even into running games.

### Summary of Invention

According to a first aspect of the present invention there is provided a system comprising:
at least one content server providing content data, the data representing at least content information for a video presentation to be displayed to the audience; and
at least one computing server computing output data from said content data, the output data representing at least a video signal for controlling a display device.

Further to this and in correspondence with said system a method is provided, the method comprising the steps of:
providing content data by at least one content server, the content data representing at least content information for a video presentation to be displayed to the audience; and
computing output data from said content data by at least one computing server, the output data representing at least a video signal for controlling a display device.

Thus the present invention proposes to separate the provision of content data from the computing of said data (such as rendering of image data or frames) by setting up at least one computing server which can be optimized for said job. Preferably a plurality of computing servers is provided to form a cluster or cloud. This means that the computing is performed by a cluster of actual servers that are connected in a self organizing form (i.e. said cloud) so that distribution of its performance in a dynamic and optimal way can easily be achieved.

According to the present invention the computing servers of said cluster or cloud can be linked to each other via the Internet to form a flexible resource being accessible via the Internet. Preferably the cluster or cloud of computing servers comprises at least one gateway server which can be accessed by a plurality of cinemas to build up video streaming links in order to instantly provide high quality video data to the display devices which are installed at the points of presentation, i.e. at the cinemas' locations, halls or rooms. Thus every cinema can be linked online to said computing cloud and can receive on request tailored data, in particular rendered video data, for instantly presenting movies, advertisements or games at the respective location. This architecture will here also be referred to as "Online Gaming Server Cloud".

According to another aspect of the present invention the system can comprise at least a first and a second plurality of computing servers, each plurality of computing servers being linked to each other to form a first and a second local cluster or local cloud of computing servers. Preferably the computing servers of each local cloud are linked to each other via a local area network (LAN). Each LAN is preferably installed at the respective point for presentation, i.e. at the respective cinema location, hall or room. Each local cluster or cloud comprises at least one gateway server being linked to a plurality of display devices, the devices being installed at said points for presentation. Thus every cinema can have its own local cloud of computing servers. This architecture is very efficient to be installed at so-called multiplex cinemas having several presentation rooms. This architecture will here also be referred to as "Local Gaming Server Cloud".

According to a further aspect of the present invention the at least one content server is installed at the location of a content provider. Preferably be several content servers can be arranged to build a cloud as well. The overall architecture can be arranged such that the content server(s) and the cloud of computing servers are installed at different locations and are linked to each other via a network or direct link, in particular via the Internet. Thus the content server(s) may be installed at or near to the provider's location whereas the computing cloud comprises servers which may be distributed over many locations. In other words: On the one hand the content server(s) constitutes a game catalogue with a content data of a large number of games, the content data being input data for game engine(s). On the other hand the computing server cloud hosts a dynamic game engine, in particular a graphics or rendering engine, to process the content data for generating ready-made data which can be transmitted to the respective projector or display device. When running a game which is presented to an audience of players who are sitting in a cinema room the game server cloud(s) will receive the respective content data and compute these data to generate the rendered video data for visual presentation. Further the game server cloud(s) may compute audio data for acoustic presentation and further output data, such as control data for vibration devices integrated into the gamepads, individual visual feedback for screens integrated into the gamepads or the like.

In one of the embodiments of the invention the system is a theater gaming system and the method of providing the data also comprises the step of controlling a display device by the output data to present images, movies, advertisements and/or games to the at least one audience. The method can also comprise the step of receiving input data or signals from the at least one audience before providing the content data by at least one content server, wherein the content data is selected from a database in dependence of the input data or signals. The input data may come from the gamepads being installed at the seats for the audience, being given to the audience as wireless devices or other methods. The method may also comprise the steps of: receiving input data or signals from the at least one audience before or during the presentation of images, movies, advertisements and/or games, wherein presentation of images, movies, advertisements and/or games audience is displayed in dependence of the input data or signals.

### Brief Description of the Drawing

Further features and advantages of the present invention, as well as the structure and operation of various illustrative embodiments of the present invention, are described in more detail below with reference to the accompanying schematic drawings, wherein:
- Fig. 1: shows the architecture of a system comprising an Online Gaming Server Cloud.
- Fig. 2: shows the architecture of a system comprising several Local Gaming Server Clouds.
- Fig. 3: schematically illustrates the steps of a method for providing data for entertaining presentations to at least one audience.

### Detailed Description of Preferred Embodiment

The present invention relates to a system and to a method for providing data for entertaining presentations to at least one audience. Such data can mean any kind of data which can be used for entertaining presentations, such as video and audio data, but also control data for mechanical effects such as vibration outputs at gamepads or the like. The term audience shall mean any group of persons who enjoy such presentations, in particular the audience in a cinema, a theater or any presentation room. In particular the present invention relates to a system and a method for providing data for computer-based entertainment, like presenting cinema movies or performing so-called theater games.

### a) Description of the Online Game Catalogue, e.g. Online Content Server:

The online game catalogue or online content server comprises at least one server storing the content that is made available for all cinemas that are attached to the system. The stored content can be of any media type, like interactive content such as games, movies or non-interactive content such as music-, video- or similar streams.

The catalogue lists these contents in an appropriate format and allows to select these media to be downloaded and integrated into individual program schedules in the cinemas or other shows.

Further the catalogue lists in addition to the content itself any necessary meta data such as run time, format, possible purchase options and such information for the cinema manager to create an individual schedule. The content server and connected terminals and server clouds are using a software that will be named "Cinema Media Manager".

### b) Description of "content data"

The catalogue server hosts the content data that is made available for the cinemas to run. The content data is any media data such as video or audio based files like movies, advertisements, trailers, pure audio files and still pictures, interactive content such as games, movies with interactive elements, advertisement with crowd participation and others that comply to the installed formats supported by the connected content and computing servers.

### c) Description of Theater Control Terminal

The theater control terminal is a pc that enables the theater manager to access the catalogue in order to schedule a program, e.g. creating a playlist of what content will play in which show room at what time. The terminal runs the aforementioned software called "cinema media manager" that allows easy and direct access to the online catalogue server, to the server clouds for monitoring and allows control of the streaming pcs that are placed in each show room to monitor and control any running program in the show rooms.

Via the theater control terminal and the "cinema media manager" the user has full control over any media content that is processed through the whole chain, starting from the catalogue, to the server cloud to the streaming pc and the projector.

### First Embodiment

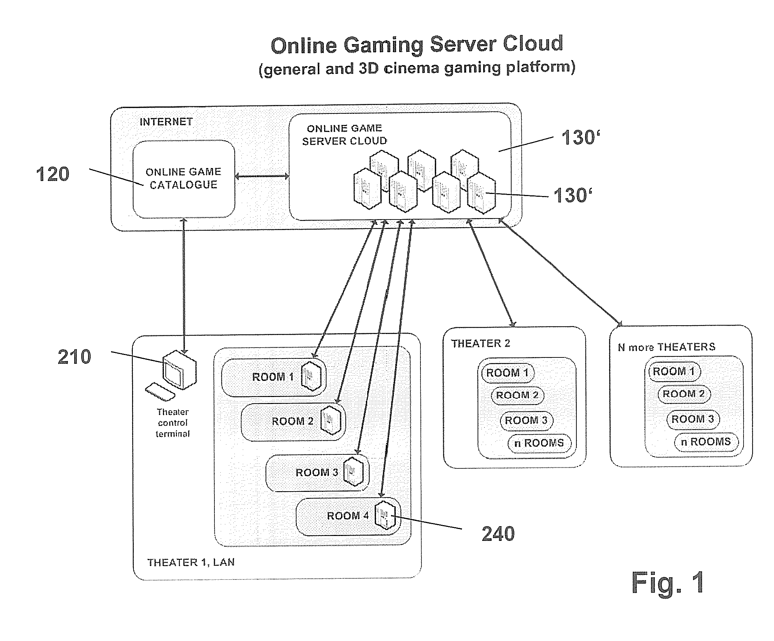

Reference is made to Fig. 1 showing the architecture of a system comprising an Online Gaming Server Cloud. The system is designed to provide a theater gaming platform for a plurality of locations, i.e. for cinemas or theater at different locations. Each cinema or theater may comprise more than one projector room. At each theater there is at least one control terminal 210 for controlling the presentations run in the respective rooms. Each room comprises a screen and a projector or a display device to show the video of the game to the audience. The projector or display device (not shown) is controlled by a computer 240 which may receive the data, in particular the rendered video, via a network link from a server cloud 130 which is also referred to as "Online Gaming Server Cloud".

Thus the online gaming server cloud 130 provides the necessary CPU and GPU performance and storage to any connected theater to play games and other interactive applications such as, but not only, video, games, live stream, advertisement and interactive movies with maximum quality and performance. Especially any interactive content profits from a server cloud due to the combination of high computation power and fast data exchange.

The cloud 130 is a cluster of actual servers that are connected in a self organizing form (said cloud) to distribute its performance in a dynamic and optimal way.

The cloud 130 is connected to at least one content server 120 which represents an Online Game Catalogue providing all data for the desired games to be played by the audiences visiting the theaters. The Online Game Catalogue 120 may comprise a cloud of connected content servers which are located at or near to a content provider. The Online Game Catalogue 120 may be accessed via the Internet by the theater control terminal 210 for requesting a service, such as starting a new game, controlling the video streaming etc.. The content data is then transmitted to the cloud 130, i.e. the workload for computing the content data is then distributed among the servers (which can be PCs) that make up the cloud 130 in an optimal way. After calculation the cloud server is sending the data back to the client, i.e. to the respective computer in the theater room.

In the field of games the most prominent data which have to be calculated are the visuals of the highest quality. By establishing a cloud of gaming servers 130 the client has always the best performance guaranteed no matter what performance the local client is capable of. Depending on the application the service is not limited to graphics only. Any demanding process can be managed by the computing cloud 130.

A preferred field of use is theater gaming. Here the small increase in lag (time lapse added due to the transport of the data forth and back) is negligible, and the demand for extreme performance makes it the best choice in terms of cost efficiency.

The system of the invention uses a media managing software ("cinema media manager") that runs on all connected computers or PCs. The software allows the cinema manager to create, change and manage a program schedule, e.g. selecting media from the online catalogue to be played in the cinema rooms, deciding on when to play what content in which room. The system can handle single media files as much as packages (a packet could be a collection of advertisements that play as a 20 minute reel). These schedules are uploaded to the cloud server where it will start on time and provide the cinema streaming pc with the correct content.

### Second Embodiment

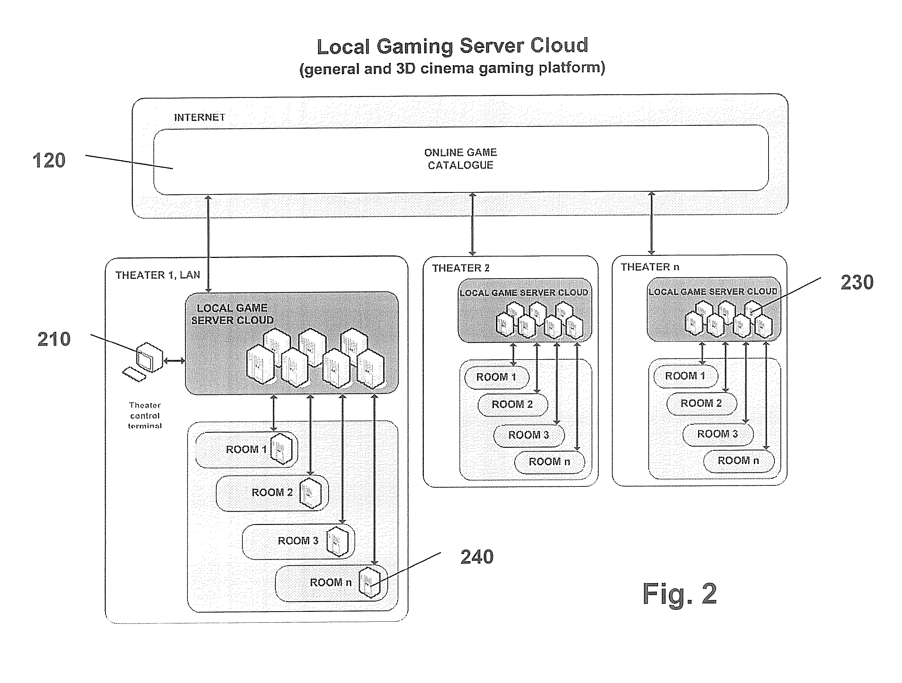

Reference is made to Fig. 2 showing the architecture of a system comprising a plurality of Local Gaming Server Clouds. The system is also designed to provide a theater gaming platform for a plurality of cinemas or theater at different locations. However in the case shown here each cinema or theater may comprise its own gaming server cloud 230 whereas the content is provided by an online game catalogue 120 as described before and shown in Fig. 1.

In the system of Fig. 2 each gaming server cloud 230 is linked to the control terminal 210 via a Local Area Network (LAN). Thus each cinema has its own computing cloud 203 or game engine which is directly controlled by the terminal 210. For starting a game the content data has to be retrieved from the content server(s) 120 and to be computed by the local computing cloud 230. This means that only the content data have to be transmitted via the Internet, but not the high data volume of rendered video data or the like. The system shown in Fig. 2 is also referred to as "Local Gaming Server Clouds".

The systems shown in both Figs. 1 & 2 comprise at least one computing cloud 130 or 230 to provide the necessary CPU and GPU performance and storage for the connected theaters in order to play games and other interactive applications.

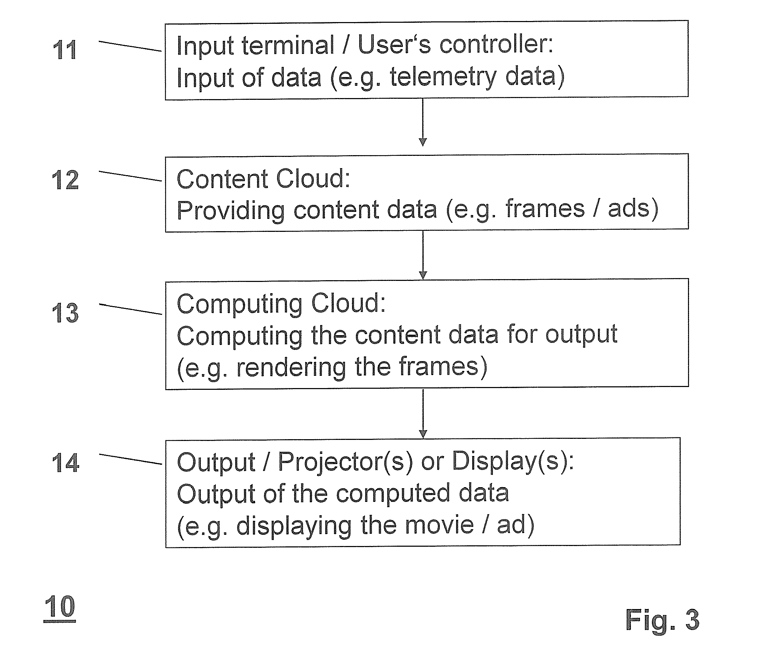

The operation of said systems will become more apparently by the following description of Fig. 3.

The Fig. 3 schematically illustrates the steps 11 to 14 of a method 10 for providing data for a gaming audience. The first step 11 refers to the input(s) of data from the player(s). Each player, such as player Pn, may input at his gamepad GPn telemetry data or the like. This can include data for example like button press, controller movement, inputs via a touchpad or acoustic commands recorded via a build-in microphone. The input data of all players are collected and evaluated by the control terminal 210. Then in step 12 the control terminal 210 requests the content cloud (see 120 in Figs. 1 & 2) to provide content data such as frames or the like. In a next step 13 these data are transmitted to the computing cloud (see 130 in Fig. 1 or 230 in Fig. 2) to be computed, in particular to be rendered for instant or later presentation on the screen SRC. In a next step 14 the rendered data are output to the projector to display the rendered video sequence on the screen. Also the output of audio or mechanical vibrations can be performed. Thus the players can control the presentation on the screen and take part in the game.

The player(s) input(s) may also be interesting for target advertisements which means that the presentation of advertisement (content and/or style) can be vary in dependence of the audience's input. These input data may be sent along with the game input. Although the inputs are kept anonymous, this feature is very specific in terms of target group triggered advertisements and/or game control.

In summary the present invention relates to a system and to a method for providing data for entertaining presentations to at least one audience, such as data for video and audio presentations in cinemas, theater rooms or the like. In particular data for computer-based entertainment such as so-called theater gaming shall be provided. The system of the invention comprises: at least one content server providing content data, the data representing at least content information for a video presentation to be displayed to the audience; and at least one computing server computing output data from said content data, the output data representing at least a video signal for controlling a display device. The computing serves can be part of the Internet to form an "Online Gaming Server Cloud" or can be installed at the locations of each cinema to form "Local Gaming Server Clouds".

## Claims

1. A system of providing data for entertaining presentations to at least one audience, the system comprising:
at least one content server (120) providing content data, the data representing at least content information for a video presentation to be displayed to the audience; and
at least one computing server (130') computing output data from said content data, the output data representing at least a video signal for controlling a display device.

2. The system of claim 1, wherein the system comprises a plurality of computing servers (130') being linked to each other to form a cluster or cloud (130) of computing servers.

3. The system of claim 2, wherein the computing servers (130') of said cluster or cloud is linked to each other via the Internet to form a flexible cluster or cloud (130) being accessible via the Internet.

4. The system of claim 3, wherein the cluster or cloud (130) of computing servers comprises at least one gateway server being linked to a plurality of display devices or a computer (240) thereof, each device being installed at a point for presentation, in particular at a cinema location, hall or room.

5. The system of claim 1, wherein the system comprises at least a first and a second plurality of computing servers, each plurality of computing servers being linked to each other to form a first and a second local cluster or local cloud (230) of computing servers.

6. The system of claim 5, wherein the computing servers of each local cluster or local server cloud (230) is linked to each other via a local network.

7. The system of claim 6, wherein each local network is installed at a point for presentation, in particular at a cinema location, hall or room.

8. The system of claim 6, wherein each local cluster or local cloud (230) is installed at a point for presentation, in particular at a cinema location, hall or room.

9. The system of claim 6, wherein each local cluster or local cloud (230) comprises at least one gateway server being linked to a plurality of display devices or a computer (240) thereof, each device being installed at a point for presentation, in particular at a cinema location, hall or room.

10. The system of claim 1, wherein the at least one content server (120) is linked to the Internet.

11. The system of claim 1, wherein the at least one content server (120) is installed at the location of a content provider.

12. The system of claim 1, wherein the at least one content server (120) and the at least one computing server (130') are installed at different locations and are linked to each other via a network or direct link, in particular via the Internet.

13. The system of claim 1, wherein the system is a theater gaming system and the at least one computing server (130') is a gaming server, in particular a rendering server.

14. A method (10) of providing data for entertaining presentations to at least one audience, the method comprising the steps of:
providing content data by at least one content server (120), the content data representing at least content information for a video presentation to be displayed to the audience (step 12);
computing output data from said content data by at least one computing server (130'), the output data representing at least a video signal for controlling a display device (step 13).

15. The method (10) of claim 14 further comprising the steps of:
controlling a display device by the output data to present images, movies, advertisements and/or games to the at least one audience (step 14).

16. The method (10) of claim 14 further comprising the steps of:
receiving input data or signals from the at least one audience (step 11) before providing the content data by at least one content server, wherein the content data is selected from a database in dependence of the input data or signals.

17. The method (10) of claim 15 further comprising the steps of:
receiving input data or signals from the at least one audience (step 11) before or during the presentation of images, movies, advertisements and/or games, wherein presentation of images, movies, advertisements and/or games audience is displayed in dependence of the input data or signals.
